# EUROPÄISCHE PATENTSCHRIFT

(11) **EP 1 093 486 B1**
(45) Veröffentlichungstag und Bekanntmachung des Hinweises auf die Patenterteilung: **04.08.2004**
(21) Anmeldenummer: 98938606.5
(22) Anmeldetag: 05.06.1998
(51) Int. Cl.: C08K 3/36, C08K 7/26

(54) **NANOPORÖSE INTERPENETRIERENDE ORGANISCH-ANORGANISCHE NETZWERKE**
NANOPOROUS INTERPENETRATING ORGANIC-INORGANIC NETWORKS
RESEAUX ORGANIQUES-INORGANIQUES INTERPENETRANTS NANOPOREUX

(43) Veröffentlichungstag der Anmeldung: 25.04.2001
(73) Patentinhaber: CABOT CORPORATION, Boston, Massachusetts 02210-2019 (US)
(72) Erfinder: SIEVERS, Werner, D-65929 Frankfurt am Main (DE); ZIMMERMANN, Andreas, D-64347 Griesheim (DE)
(74) Vertreter: Luderschmidt, Schüler & Partner GbR
(86) Internationale Anmeldenummer: PCT/EP1998/003381
(87) Internationale Veröffentlichungsnummer: WO 1999/064504

(56) Entgegenhaltungen:
- EP-A- 0 337 695
- EP-A- 0 659 530
- WO-A-96/15998
- DE-A- 4 327 923
- GB-A- 919 425
- US-A- 4 659 749
- US-A- 4 954 327
- US-A- 5 075 348
- US-A- 5 081 163
- US-A- 5 506 290

## Beschreibung

Die Erfindung betrifft nanoporöse interpenetrierende organisch-anorganische Netzwerke, Verfahren zu deren Herstellung und deren Verwendung.

Organische Polymere zeichnen sich oft durch gute Verformbarkeit und Elastizität aus. Sie sind jedoch für viele Anwendungen nicht hart und kratzfest genug. Keramische Werkstoffe dagegen sind hart und kratzfest, jedoch in der Regel spröde und nicht elastisch. Will man die Eigenschaften von organischen Polymeren und anorganischen Keramiken verbinden, so kann man versuchen, aus beiden Werkstoffen einen moglichst einheitlichen gemischten Werkstoff herzustellen. Verschiedene Ansätze in dieser Richtung sind bekannt.

In der US-A-4,980,396 wird eine Zusammensetzung beschrieben, umfassend ein Organopolysiloxan, einen Füllstoff vom Silicatyp, eine Organosiliconverbindung des Isocyanurat-Typs und ein organisches Losungsmittel. Die Zusammensetzung wird verwendet, um einen Fluorsiliconkautschuk an Metall, Kunststoff und andere Materialien fest zu binden, wobei ein Fluorsilicatkautschuk durch atmosphärische Heißluftvulkanisierung vulkanisiert werden soll. Die Inhaltsstoffe werden in Form einer Lösung bzw. Aufschlämmung beispielsweise in Ethylacetat als organischem Lösungsmittel eingesetzt.

In der US-A-5,342,876 wird ein Verfahren zur Herstellung von porösen und kugelförmigen Siliciumdioxidpartikeln beschrieben, bei dem Polyacrylamid-Polymere als Koagulationswachstumsmittel für die Koagulation von Kieselgelen eingesetzt werden. Es werden dabei Kieselgelkoagulate erhalten, die ein Porenvolumen von 0,3 bis 1,0 cm³/g aufweisen Es wird kein interpenetrierendes Netzwerk von Siliciumdioxid und Polyacrylamid ausgebildet, so daß das Polyacrylamid aus dem hergestellten Korper herausgelost werden kann. Das Polyacrylamid dient somit zum Aufbau des Siliciumdioxidkörpers und ist kein Bestandteil eines organisch-anorganischen Netzwerks.

Weiterhin wurden in verschiedenen Ansätzen siliciumorganische Ausgangsverbindungen eingesetzt, um zu organisch-anorganischen Hybridmaterialien zu gelangen. Dabei muß bei der Verarbeitung der sehr kostspieligen siliciumorganischen Verbindungen in einem organischen Lösungsmittel gearbeitet werden. Sowohl die Verfahrensführung als auch die Ausgangsstoffe sind sehr kostspielig, so daß die Anwendungsmöglichkeiten dieses Verfahrens auf Spezialanwendungen beschränkt sind.

Zu dieser Gruppe von Verfahren zählen Herstellungsverfahren von Nanocomposit-Materialien, bei denen Alkenylsilane thermisch oder photochemisch polymerisiert werden. Nach der Polymerisation der organischen Bestandteile wird durch Hydrolyse ein anorganisches Netzwerk hergestellt. Hierbei sind Bulkmaterialien mit hoher Dichte zugänglich. Diese Materialien sind wiederum extrem kostspielig.

Aufgabe der vorliegenden Erfindung ist die Bereitstellung eines Verfahrens zur Herstellung von Materialien mit in sehr kleinen Dimensionen penetrierenden organischen und anorganischen Netzwerken, das von preiswerten Ausgangsmaterialien ausgeht und zu Produkten mit vielseitig einstellbaren Eigenschaften führt. Dabei sollen insbesondere Aerogele und Xerogele mit niedriger thermischer Leitfähigkeit und erhohter Schallabsorption sowie Composit-Materialien zugänglich sein, die die Eigenschaften organischer Polymere und anorganischer Keramiken verbinden.

Gelöst wird die Aufgabe durch ein Verfahren zur Herstellung von Materialien mit in Dimensionen von maximal 100 nm interpenetrierenden organischen und anorganischen Netzwerken durch
(1) Mischen von waßrigen Lösungen oder Dispersionen von zur Ausbildung von Polymernetzwerken in wäßriger Phase fähigen organischen Polymeren, Polymervorläufern oder deren Gemischen und von Siliciumdioxid-Komponenten,
(2) Änderung des pH-Werts und/oder thermische Behandlung der wäßrigen Lösung oder Dispersion zur Ausbildung eines Gels aus interpenetrierenden organischen und Kieselgel-Netzwerken und
(3) Trocknen des Gels.

Es wurde erfindungsgemäß gefunden, daß die vorstehend aufgeführten Materialien nach Verfahren zur Herstellung von Aerogelen und Xerogelen herstellbar sind, wobei neben anorganischen Ausgangstoffen zur Herstellung von Aerogelen und Xerogelen organische Polymere oder Polymervorläufer eingesetzt werden, die unter den Bedingungen der Bildung von Aerogelen und Xerogelen organische Netzwerke ausbilden können. Nachstehend werden zunächst die Ausgangsmaterialien und sodann die unterschiedlichen Verfahrensvarianten beschrieben.

Zur Ausbildung des organischen Polymernetzwerks werden solche organischen Polymere, Polymervorläufer oder deren Gemische eingesetzt, die in wäßriger Phase Netzwerke ausbilden können.

Prinzipiell eignen sich dazu alle organischen, in Wasser loslichen oder dispergierbaren Polymere, worunter hier Polymerisate, Polykondensate oder Polyaddukte verstanden werden, die in Wasser vernetzt werden können. Beispiele sind nichtionischer Polyvinylalkohol, der vollständig oder teilweise aus Polyvinylacetat verseift sein kann, Polyethylenglykol, anionische Polymere wie Carboxymethylcellulose und Natriumpoly(meth)acrylat oder andere Poly(meth)acrylate, oder kationische Polymere, Polyamide oder Polyvinylamine sowie deren Gemische. Auch Homo- und Copolymere von Sterolen, wie Gallensäurehomopolymere ,-copolymere oder -oligomere, wie sie in der EP-A-0 549 967 beschrieben sind, oder Cholesterin können eingesetzt werden. Vorzugsweise werden neben Polyvinylalkohol oder Poly(meth)acrylaten auf Formaldehyd oder Formaldehyd enthaltenden Harzen basierende organische Polymere oder deren Vorlaufer verwendet. Dies sind vornehmlich Melaminharze, Phenolharze oder Resorcinharze Besonders bevorzugt sind Melamin-Formaldehydharze, die gegebenenfalls Lösungsvermittler, wie Sulfamat enthalten und vorzugsweise im pH-Bereich von 5 bis 6 gelieren. Diese Polymere sollten mit gängigen Vernetzern, wie Formaldehyd oder Glutardialdehyd in wäßrigem Medium vernetzbar sein. Allgemein können als Vernetzer für die organische Komponente auch aliphatische und aromatische Dialdehyde, insbesondere Glutardialdehyd, aliphatische oder aromatische Diepoxide oder aliphatische und aromatische Diisocyanate eingesetzt werden.

Das organische Polymernetzwerk wird vorzugsweise durch Polykondensation in der wäßrigen Phase erhalten. Polymere und Polymervorlaufer, die radikalisch in wäßriger Phase polymerisiert werden können, können jedoch auch eingesetzt werden.

Melamin-Formaldehydkondensate sind beispielsweise in der US-A-5,086,085 beschrieben. Resorcin-Formaldehydkondensate sind beispielsweise in der US-A-4,873,218 beschrieben.

Vorzugsweise werden organische Polymere oder Polymervorlaufer oder deren Gemische ausgewählt, die durch Einstellung des pH-Wertes oder der Temperatur im gleichen Bereich wie das anorganische (silikatische) Netzwerk polykondensieren.

Werden Polyacrylsäuren oder Gallensaurehomopolymere oder -copolymere gemäß EP-A-0 549 967 wie auch andere Derivate der Polyacrylsäure oder des Polyacrylsäureamids eingesetzt, so kann zusatzlich ihr enormes Quellverhalten ausgenutzt werden, so daß die Polyacrylsäuren auch bereits vernetzt und in getrockneter Form eingesetzt werden können, wobei sie zur Quellung in ein Kieselsäuresol gegeben werden können. Der Ausdruck "organische Polymere, Polymervorläufer oder deren Gemische" bezeichnet somit alle Komponenten, die notwendig sind, um in wäßriger Lösung oder Dispersion ein Polymernetzwerk zu erhalten. Insbesondere schließt dieser Ausdruck Polymere, Präpolymere, Monomere, Vernetzer und andere zur Polymerisation bzw Vernetzung dienende Stoffe ein.

Die erfindungsgemäß eingesetzten Siliciumdioxid-Komponenten sind solche Komponenten, die in wäßriger Lösung polymere Netzwerke bilden können. Vorzugsweise werden als Siliciumdioxid-Komponente Wasserglas, Schichtsilikate oder Kieselsäuren eingesetzt. Metalloxide, die für die Sol-Gel-Technik geeignet sind, sind beispielsweise in C.J. Brinker, G.W. Scherer, Sol-Gel-Science, 1990, Kapitel 2 und 3, Academic Press Inc., New York, beschrieben. Als bevorzugte Komponente wird dabei freie Kieselsäure eingesetzt, die beispielsweise aus Wasserglas durch Abtrennung der Kationen mittels Ionentauschern hergestellt werden kann. Ein solches Verfahren ist beispielsweise in der EP-A-0 658 513 beschrieben. Freie Kieselsäure, aus der die Kationen entfernt sind, hat eine sehr gute Kompatibilität mit zur Ausbildung von Polymernetzwerken fähigen organischen Polymeren, Polymervorläufern oder deren Gemischen und kann unter verschiedensten Bedingungen in Abhängigkeit von pH-Wert und Konzentration stabile Sole und Gele bilden. Im allgemeinen sind verwendbare Kieselsäuren aus Natrium- oder Kaliumoxid und Siliciumdioxid aufgebaut. Es können auch kolloide Kieselsäuren eingesetzt werden.

Besonders bevorzugt wird im erfindungsgemäßen Verfahren eine Kombination aus Wasserglas oder insbesondere freier Kieselsäure und Melaminharzen, insbesondere handelsüblichen sulfamatmodifizierten Melaminharzen eingesetzt.

Als weitere Inhaltsstoffe können mit einer wäßrigen Phase verträgliche Inhaltsstoffe verwendet werden, die üblicherweise zum Aufbau von Polymeren oder Kieselgelen eingesetzt werden. Vorzugsweise werden Füllstoffe in Form von Teilchen, Fasern, Geweben, Vliesen, Matten oder deren Gemischen, Funktionsstoffe, wie Farbstoffe, Indikatoren, Biomoleküle, z.B. als wäßrige oder nichtwäßrige Lösungen, Dispersionen oder Suspensionen, oder deren Gemische eingesetzt. Als Biomoleküle kommen beispielsweise Proteine, wie Enzyme, Transportproteine, Rezeptoren oder Antikörper in Betracht. Diese Füll- oder Funktionsstoffe können die elektrischen, dielektrischen, optischen, mechanischen, rheologischen, sensorischen, permativen oder diffusiven Eigenschaften der erhaltenen Materialien gezielt beeinflußen.

Insbesondere bei der Herstellung von Wärmedämmstoffen werden IR-Trübungsmittel als Füllstoffe eingefügt, die zur Verminderung des Strahlungsbeitrags der Wärmeleitfähigkeit dienen Geeignete IR-Trübungsmittel sind beispielsweise Ruß, Titandioxid, Eisenoxid, Zirkonoxid oder deren Gemische. Sie können der wäßrigen Losung oder Dispersion bzw. dem Sol zugesetzt werden.

Zur Verbesserung der mechanischen Festigkeit der erhaltenen Formkörper oder Materialien können ebenfalls Füllstoffe zugesetzt werden. Insbesondere werden Fasern, beispielsweise in Form von Vliesen oder Matten zugesetzt Als Fasermaterial konnen sowohl anorganische Fasern, wie Glasfasern oder Mineralfasern, als auch organische Fasern, wie Polyesterfasern, Polyamidfasern oder Nylonfasern verwendet werden. Die Fasern können auch beschichtet sein, beispielsweise können Polyesterfasern eingesetzt werden, die mit einem Metall wie Aluminium metallisiert sind. Zudem können geschwärzte Fasern, beispielsweise mit Ruß geschwärzte PET-Fasern eingesetzt werden, wenn der Strahlungsbeitrag zur Wärmeleitfähigkeit des resultierenden Materials vermindert werden soll.

Die Brandklasse des nach der Trocknung erhaltenen Materials wird durch die Brandklasse des Aerogels, der organischen Komponente und des Fasermaterials bestimmt. Um eine möglichst günstige Brandklasse (schwer entflammbar oder unbrennbar) des Materials zu erhalten, werden vorzugsweise Fasern aus nicht brennbarem Material, beispielsweise Mineral- oder Glasfasern eingesetzt. Beispiele schwerentflammbarer Fasern sind Melaminharzfasern sowie schwer entflammbare Polyesterfasern.

Um bei der Verwendung als Wärmedämmaterialien eine Erhohung der Wärmeleitfähigkeit durch die zugesetzten Fasern zu vermeiden, sollte der Volumenanteil der Fasern 0,1 bis 30, vorzugsweise 1 bis 10 Gew.-%, bezogen auf das getrocknete Material, betragen. Zudem sollte die Wärmeleitfähigkeit des Fasermaterials so gering wie möglich sein, vorzugsweise geringer als 1 W/mK Durch geeignete Wahl von Faserdurchmesser und/oder Fasermaterial können der Strahlungsbeitrag zur Wärmeleitfähigkeit vermindert und eine größere mechanische Festigkeit erzielt werden. Dazu soll vorzugsweise der Faserdurchmesser bei nichtmetallisierten Fasern 0,1 bis 30 µm und/oder bei metallisierten Fasern 0,1 bis 20 µm betragen.

Die mechanische Festigkeit des nach der Trocknung erhaltenen Materials wird weiterhin durch Länge und Verteilung der Fasern in der wäßrigen Lösung oder Dispersion beeinflußt. Die Fasern können beispielsweise als einzelne Fasern ungeordnet oder ausgerichtet eingebracht werden. In diesem Fall sollten sie, um eine hinreichende Festigkeit des Verbundmaterials zu gewahrleisten, eine Länge von mindestens 1 cm, vorzugsweise mindestens 2 cm aufweisen.

Ebenso können Vliese oder Matten verwendet werden, die mit der Lösung oder Dispersion durchtränkt sind, wobei auch mehrere Vliese oder Matten übereinander geschichtet werden können. Im Falle der Schichtung von Matten mit einer Vorzugsrichtung ist eine Änderung der Vorzugsrichtung von einer Schicht zur nächsten vorteilhaft.

Weitere Inhaltsstoffe sind
- Farbstoffe in typischen Konzentrationen, um die Farbe des erfindungsgemäßen Materials festzulegen. Grundsätzlich können alle Farbstofftypen entweder in Lösung oder in Dispersion eingesetzt werden.
- Stabilisatoren, z.B. UV-Stabilisatoren und hygroskopische Komponenten, z.B. Polyacrylsäuren, sowie Amine, z.B. Polyvinylamine oder immobilisierte Silylamine, die die Quellwirkung und das Adsorptionsverhalten des Materials beeinflussen.
- flammhemmende Stoffe, wie sie als Zuschlagsstoffe für die eingesetzten Polymere typischerweise verwendet werden, z. B Phosphate und Bromverbindungen, sowie IR-Absorber.
- Indikatoren, z.B. pH-Indikatoren, sowie Biomoleküle, z.B. Proteine, wie Enzyme, Transportproteine, Rezeptoren oder Antikörper, wie fluoreszenzmarkierte Antikörper und Farbstoffe, die das optische Verhalten (Absorption, Reflexion, Fluoreszenzquenching) in Gegenwart von zu detektierenden Substanzen ändern.

Die Inhaltsstoffe können kovalent, durch Einschluß in einem Hohlraum aufgrund der Größe, oder aber durch Wasserstoffbrückenbindungen im Composit gebunden sein. Es können auch spezielle Immobilisierungstechniken, wie sie aus der Farbstofftechnik und Biotechnologie bekannt sind, eingesetzt werden. Wichtig ist jedoch, daß sie während des bestimmungsgemäßen Gebrauchs nicht freigesetzt werden. Die Inhaltsstoffe konnen vor, während und/oder nach dem Trocknungsprozeß, dann vorzugsweise vor einer nachgeschalteten Nachkondensation des organischen Netzwerks eingebracht werden. Es ist ebenfalls möglich, zunächst ein Granulat des Materials herzustellen, zu mahlen und danach mit einem oder mehreren der oben genannten Füll- und Funktionsstoffe zu vermischen.

In der zur Herstellung der erfindungsgemäßen Materialien eingesetzten Lösung oder Dispersion betragt das Gewichtsverhältnis von Siliciumdioxid-Komponenten zu organischen Polymeren und/oder Polymervorläufern vorzugsweise 10 bis 98, besonders bevorzugt 20 bis 90, insbesondere 30 bis 80. Zur Herstellung von Aerogelen oder Xerogelen beträgt das Verhältnis vorzugsweise 10 bis 98, besonders bevorzugt 20 bis 90. Zur Herstellung von Composit-Materialien beträgt das Verhältnis vorzugsweise 20 bis 90, insbesondere 30 bis 80.

Die im erfindungsgemäßen Verfahren eingesetzte wäßrige Lösung enthält vorzugsweise 3 bis 70, besonders bevorzugt 5 bis 50, insbesondere 5 bis 35 Gew.-% Inhaltsstoffe, bezogen auf die gesamte wäßrige Losung oder Dispersion. Dabei beträgt der Anteil an Polymeren und/oder Polymervorläufern vorzugsweise 1 bis 50, besonders bevorzugt 1 bis 30 Gew.-%. Der Anteil an Siliciumdioxid-Komponenten beträgt vorzugsweise 1 bis 30, besonders bevorzugt 1 bis 25 Gew.-%.

Die wäßrige Lösung oder Dispersion zur Ausbildung von Polymernetzwerken kann nach beliebigen geeigneten Verfahren hergestellt werden. Beispielsweise können getrennte wäßrige Lösungen oder Dispersionen der organischen und anorganischen Materialien hergestellt und sodann vermischt werden. Es können auch alle Materialien nacheinander in Wasser gelost oder dispergiert werden. Der pH-Wert der so erhaltenen Lösung wird vorzugsweise so eingestellt, daß eine für den Mischvorgang notwendige Verweilzeit eingehalten wird, bis sich aus dem Sol ein Gel bildet.

Als wäßrige Phase wird vorzugsweise Wasser eingesetzt. Es kann jedoch auch ein Gemisch aus Wasser und organischen Lösungsmitteln, wie Alkoholen, Polyolen, cyclischen Ethern u.s.w. eingesetzt werden. Dabei beträgt der Anteil an organischem Lösungsmittel, sofern es vorliegt, vorzugsweise 0,1 bis 10, besonders bevorzugt 0,1 bis 5 Gew -%. In der Regel wird in Wasser als wäßriger Phase gearbeitet.

Die wäßrige Phase mit den organischen und anorganischen Ausgangssubstanzen, die ein Sol sein kann, wird im zweiten Schritt durch Änderung des pH-Werts und/oder durch thermische Behandlung der wäßrigen Losung oder Dispersion in ein Gel aus interpenetrierenden organischen und Kieselgel-Netzwerken überführt. Durch entsprechende Einstellung des pH-Wertes kann die Bildung des silikatischen Netzwerks (Kieselgels) vor der Bildung des organischen Netzwerks erfolgen. Es können jedoch auch silikatisches und organisches Netzwerk parallel gebildet werden oder das organische Netzwerk zuerst. Durch Zugabe einer Base oder einer Säure können über die Steuerung des pH-Werts die Zeit zur Gelbildung und der Aufbau der beiden Netzwerke gesteuert werden. Der Aufbau der Netzwerke hängt auch davon ab, ob Vernetzer für das organische Netzwerk eingesetzt werden. Vorzugsweise wird zur Gelbildung der pH-Wert auf 3 bis 7 eingestellt.

Ein festes Gel kann auch durch Temperaturerhöhung bis unterhalb des Siedepunkts von Wasser bzw. auch darüber, sofern in einer Druckapparatur ein Sieden des Wasser verhindert werden kann, bewirkt werden Dabei kann in Abhängigkeit von der Temperatur im Zeitraum von Sekunden bis wenigen Stunden ein festes Gel erhalten werden. Vorzugsweise wird bei einer Temperatur von 10 bis 90°C, besonders bevorzugt 30 bis 85°C gearbeitet, wobei die Zeit zur Ausbildung des Gels vorzugsweise 0,1 Sekunden bis 2 Stunden beträgt.

Das so erhaltene Gel kann bei erhöhtem Druck im Bereich von 1 bis 30, vorzugsweise 1 bis 12 bar unter einer Temperatur von 10 bis 200°C, vorzugsweise 5 bis 150°C, insbesondere 50 bis 150°C gehärtet und gealtert werden. Dabei wird der Druck so gewählt, daß ein Sieden des Wassers verhindert wird.

Es können auch pH-Wert-Änderung und Temperaturerhöhung simultan eingesetzt werden.

Besonders bevorzugt wird das Gel durch Einstellen des pH-Werts auf 3 bis 8, insbesondere 5 bis 6 und Erhöhung der Temperatur auf einen Wert von 0 bis 85°C bei Umgebungsdruck hergestellt.

Im Gel liegt ein interpenetrierendes Netzwerk von silikatischem und organischem Netzwerk vor. Dabei können auch silikatisches Netzwerk und organisches Netzwerk miteinander verbunden sein, beispielsweise durch kovalente Bindungen, Wasserstoffbrückenbindungen oder ionische Bindungen.

Die organischen und anorganischen (silikatischen) Netzwerke interpenetrieren in Dimensionen von maximal 100 nm, vorzugsweise maximal 50 nm, besonders bevorzugt maximal 30 nm, insbesondere maximal 15 nm. Der Ausdruck "Dimensionen" bedeutet dabei, daß in mindestens 50, vorzugsweise 70, insbesondere 80 Gew.-% der Netzwerke von jedem Punkt des Netzwerks in einem Abstand von maximal 100, vorzugsweise maximal 50, besonders bevorzugt maximal 30, insbesondere maximal 15 nm die Grenze der entsprechenden organischen oder anorganischen Phase erreicht wird. Wird von einem Modell interpenetrierender Röhren ausgegangen, so gibt diese Zahl den maximalen Rohrendurchmesser für jedes Netzwerk an. Da die Netzwerke zumindest teilweise aneinander anliegen und auch miteinander verbunden sein können, wird in der Regel in diesem Abstand eine Phasengrenze von organischer zu anorganischer Netzwerkphase erreicht. Es kann somit auch von einem Gemisch aus organischer und anorganischer Phase auf Nanometer-Skala gesprochen werden.

Im Gegensatz zu den erfindungsgemäßen interpenetrierenden Netzwerken liegen in den meisten bekannten Gemischen aus organischen und anorganischen Materialien wesentlich größere Dimensionen vor.

Nach der Ausbildung eines Gels aus interpenetrierenden organischen und Kieselgel-Netzwerken wird das Gel getrocknet. Die Trocknung kann dabei auf beliebige Weise erfolgen, wodurch unterschiedliche Materialien zuganglich sind. Gemäß einer Ausführungsform der Erfindung wird das Trocknen unter Bedingungen ausgeführt, die zu einem Xerogel oder Aerogel führen. Die Unterteilung in Aerogele und Xerogele erfolgt dabei nach Art der verwendeten Trocknungstechnik, mit der das im Gel enthaltene Lösungs- oder Dispergiermittel entfernt wird. Ein getrocknetes Gel wird als Aerogel bezeichnet, wenn das Lösungs- oder Dispergiermittel des Gels bei Temperaturen oberhalb der kritischen Temperatur und ausgehend von Drücken oberhalb des kritischen Drucks entfernt wird. Hierdurch wird keine Flüssig-Dampf-Phasengrenze durchlaufen und daher erfolgt auch keine Ausbildung von Kapillarkräften, die während der Trocknung zu einem Gelkollaps führen. Wird das Lösungs- oder Dispergiermittel dagegen unter Bildung einer Flüssig-Dampf-Grenzphase entfernt, bezeichnet man das entstehende Gel als Xerogel. Hierbei ändert sich die räumliche Anordnung des Netzwerks, so daß die Abstände zwischen den Strukturelementen wesentlich kleiner werden. Verfahren zur Trocknung des Gels zur Bildung von Xerogelen sind beispielsweise in Annu. Rev. Mater. Sci. 1990, 20, Seite 269 ff.: L.L. Hench und W. Vasconcelos: Gel-Silica Science beschrieben Trocknungsverfahren zur Herstellung von Aerogelen sind beispielsweise in S. S. Kistler, J. Phys Chem. 36 (1932) beschrieben.

Die erfindungsgemäß hergestellten Aerogele/Xerogele weisen vorzugsweise eine Dichte von maximal 0,6, besonders bevorzugt maximal 0,3 g/cm³ auf Sie haben dabei vorzugsweise eine Wärmeleitfähigkeit von maximal 0,06 W/mK, besonders bevorzugt von maximal 0,04 W/mK. Insbesondere bei einem relativen Gewichtsanteil des anorganischen Netzwerks von 1 bis 50, vorzugsweise 1 bis 10 Gew.-%, bezogen auf das gesamte Aerogel, ist es möglich, Aerogele mit einer Dichte von weniger als 0,27 g/cm³ herzustellen.

Die erfindungsgemäßen Aerogele weisen eine gegenüber bekannten anorganischen Aerogelen erhöhte mechanische Festigkeit auf.

Die Aerogele können aufgrund ihrer niedrigen Wärmeleitfähigkeit als Wärmedämmaterialien (thermische Isolationsmaterialien) und aufgrund ihrer hohen Schallabsorption als Schalldämpfungsmaterialien eingesetzt werden. Hierzu können beliebige geeignete Formkörper oder Oberflächenbeschichtungen aus dem Aerogel hergestellt werden. Die Aerogele können in möglichst hoher Volumenkonzentration entweder direkt als Aerogelformkörper, beispielsweise in Form von Platten, Rollen, Filmen oder Kugeln, oder Granulatschüttung eingesetzt werden. Die Herstellung der Formkörper kann dabei vor der Gelbildung, beispielsweise durch Einbringen der wäßrigen Lösung oder Dispersion in eine Form oder Aufbringen auf eine Oberfläche und anschließende Ausbildung des Gels und Trocknung hergestellt werden.

Es ist weiterhin möglich, die Aerogele nach dem Stand der Technik mit gängigen Konfektionierungstechniken, beispielsweise als wärmedämmende Beimischung in Schäumen gemäß der EP-A-0 667 370, in der hydrophobisierten Form in wäßrigen Suspensionen gemäß DE-A-44 37 424 oder als Füllstoff in keramischen Weiterverarbeitungstechniken eingesetzt werden, wie sie in der WO 96/15997 und der WO 96/15998 beschrieben sind. In Verbindung mit Extrusionstechniken ist es von besonderem Vorteil, daß die mechanische Druckstabilität (Elastizitätsmodul) gegenüber den ohne organische Bestandteile hergestellten Aerogelen bei vergleichbarer Dichte wesentlich erhöht ist. Die Beschichtung von Oberflächen ist aufgrund des Haftvermögens der Lösungen oder Dispersionen gut möglich. Geeignete Verfahren zum Auftragen sind beispielsweise das Verspritzen, das Spachteln oder das Verstreichen. Nach Trocknung der aufgetragenen Schichten erhält man gut haftende, wärmeisolierende und schallabsorbierende Oberflächenbeschichtungen. Als Schallabsorptionsmaterialien können die Materialien direkt oder in Form von Resonanzabsorbern verwendet werden, da sie eine geringe Schallgeschwindigkeit und verglichen mit monolithischen Aerogelen eine höhere Schalldämpfung aufweisen.

Aufgrund der hohen inneren Oberfläche sind die Aerogele auch als Adsorptionsmaterialien verwendbar. Sie weisen typischerweise Porengrößen im Bereich von 5 bis 100, vorzugsweise 5 bis 20 auf. Sie können somit als Adsorptionsmittel für eine Vielzahl von Stoffen verwendet werden, die entweder an den eingesetzten organischen Polymeren oder den Kieselgelen adsorbieren können. Sie können zudem aufgrund ihrer durchgängigen Poren als Filtermaterialien eingesetzt werden.

Zudem weisen sie Barnereeigenschaften gegen Wasser und/oder organische Lösungsmittel auf.

Sie können ferner als Füllmaterial für chromatographische Trennsaulen, beispielsweise zur chiralen Selektion und/oder Trennung von Enantiomeren eingesetzt werden. Außerdem sind sie als Basismaterial für Membranen geeignet.

Weiterhin können sie im Elektronikbereich, beispielsweise zur Herstellung integrierter Schaltkreise (IC) eingesetzt werden.

Zudem können sie mit Verbindungen beladen werden, die ihre Verwendung als Sensoren ermöglicht. Beispielsweise können funktionale Einheiten in den Aerogelen eingeschlossen werden, wie pH-Indikatoren oder Feuchtigkeitsindikatoren. Somit sind die erfindungsgemäßen Aerogele in einer Vielzahl von Sensor-Anwendungen einsetzbar.

In Verbindung mit Farbstoffen, Indikatoren, und/oder Biomolekülen, wie Proteinen, z.B. Enzymen, Transportproteinen, Rezeptoren oder Antikörpern sind sie so in der medizinischen Diagnostik und Sensorik einsetzbar.

Sie können zudem zur verlangsamten Wirkstofffreisetzung eingesetzt werden. Dazu werden sie mit Wirkstoffen beladen, die reversibel an die Netzwerke gebunden werden. Die Anbindung kann beispielsweise über die Silikatstrukturen oder über gegebenenfalls im organischen Netzwerk vorliegende Aminogruppen erfolgen. So können beispielsweise Wirkstoffe, wie Cholesterin und andere pharmazeutische Wirkstoffe, verlangsamt freigesetzt werden. Hierbei kann die spezifische Bindung bestimmter Verbindungen an das Aerogel ausgenutzt werden. Beispielsweise kann auch durch eine pH-Änderung das Bindungsverhalten modifiziert werden.

Gegenüber nicht mit organischen Polymernetzwerken modifizierten Aerogelen weisen die erfindungsgemäßen Aerogele eine erhöhte Flexibilität und Elastizität auf. Sie können somit besonders bevorzugt mechanisch belastet werden, wobei sie insbesondere im Vergleich zu spröden rein anorganischen Aerogelen große Vorteile zeigen.

Durch entsprechende Auswahl geeigneter organischer Polymere können die Aerogele biokompatibel ausgerüstet werden, so daß zudem eine Anbindung von Biomolekülen, wie Proteinen, z. B. Enzymen, Transportproteinen, Rezeptoren oder Antikörpern möglich ist.

In Form von Xerogelen können die erfindungsgemäßen Materialien für entsprechende Anwendungen eingesetzt werden, wobei das Porenvolumen geringer ist als bei den Aerogelen. Es kann für die Anwendungen auf die vorstehende Beschreibung der Aerogele verwiesen werden.

Das Trocknen der Gele kann auch unter Bedingungen ausgeführt werden, die zu einem Composit-Material führen. Dabei kann das Composit-Material calciniert werden. Zur Herstellung von Composit-Materialien werden die Gele so entwässert, so daß die Netzwerkstrukturen kollabieren und ein kompakter Festkörper erhalten wird, der nur geringe Mengen an Poren oder keine Poren aufweist. Typischerweise haben diese Festkörper eine Dichte von 0,8 bis 1,2 g/cm³. Die so erhaltenen Composit-Materialien können, wie bei den Aerogelen beschrieben, in beliebige Formen gebracht werden oder als Oberflächenbeschichtungen verwendet werden. Sie weisen dabei deutlich unterschiedliche Eigenschaften im Vergleich zu organischen Polymeren oder anorganischen Keramiken auf. Zudem sind die Materialien in der Regel transluzent. Insbesondere in Verbindung mit Füllstoffen, wie sie vorstehend beschrieben sind, werden Materialien mit sehr vorteilhaften Eigenschaften, insbesondere in bezug auf Elastizität und mechanische Festigkeit erhalten. Die Materialien sind kratzfest und temperaturstabil und wesentlich weniger brüchig und spröde als silikatische Materialien. Durch Temperaturbehandlung, insbesondere Calcinieren, vorzugsweise bei Temperaturen von 80 bis 200°C, besonders bevorzugt 90 bis 150°C, insbesondere 90 bis 130°C können die organischen Netzwerke weiter verschmolzen bzw. gehärtet werden. Bei Verwendung von kondensierbaren organischen Polymeren kann eine weitergehende Kondensation eintreten. So können diese nicht-porösen Materialien in Form von Granulaten zur Herstellung von Formkörpern eingesetzt werden, wobei die Granulate vorzugsweise unter Erwarmen verpreßt werden. Bei geeigneten Anteilen an organischen Netzwerken können die Granulate beispielsweise durch Extrudieren geformt werden. Bei Verwendung als Bulk-Materialien sind erfindungsgemäß sogenannte Nanocomposites zugänglich, die wesentlich preiswerter als die bisher bekannten Nanocomposites herstellbar sind. Aus den Composit-Materialien können somit Granulate oder keramische Formkörper hergestellt werden. Auch für Oberflächenbeschichtungen sind diese Composit-Materialien geeignet. Beispielsweise können bei ihrer Verwendung flexible und kratzfeste Oberflächen erhalten werden.

Die anorganischen Netzwerke lassen sich erfindungsgemäß chemisch modifizieren. Dazu kann beispielsweise ein Lösungsmittelaustausch in den Gelen mit einem organischen Lösungsmittel erfolgen, wie es beispielsweise in der EP-A 0 658 513 beschrieben ist. Hierdurch können beispielsweise durch überkritische Trocknung in Methanol Methoxygruppen oder allgemeiner durch Trocknung in Alkanolen Alkoxygruppen aufgebracht werden. Dieses Verfahren ist auf die kovalente Aufbringung von hydrophoben Gruppen beschränkt.

Eine organische Modifizierung der erfindungsgemaßen Gele, bei der sich der organische Anteil frei wählen läßt, ist beispielsweise in der WO 97/10178 beschrieben. Dabei können beispielsweise Komponenten zur hydrophoben Oberflächenmodifikation ins Lösungsmittel eingebracht werden, wonach überkritisch oder unterkritisch getrocknet wird. Es können auch mehrere Losungsmittelwechsel mit unterschiedlichen organischen Lösungsmitteln nacheinander erfolgen. Werden zusätzliche Stoffe zur Hydrophobierung zugesetzt, so kann uberschussige Reaktionslösung vor der anschließenden Trocknung durch Waschen mit reinem Lösungsmittel entfernt werden. Als organische Lösungsmittel kommen im allgemeinen aliphatische Alkohole, Ether, Ester oder Ketone sowie aliphatische oder aromatische Kohlenwasserstoffe in Betracht. Man kann auch Gemische aus den genannten Lösungsmitteln verwenden. Bevorzugte Losungsmittel sind Methanol, Aceton, Tetrahydrofuran, Essigsäureethylester, Dioxan, n-Hexan, n-Heptan und Toluol. Besonders bevorzugt wird Aceton als Lösungsmittel verwendet.

Bevorzugtes Ziel der Oberflächenmodifikation ist die Einführung von kovalent gebundenen hydrophoben Oberflachengruppen, die bei der Anwendung hydrolysestabil sind. Geeignete Gruppen sind Trialkylsilylgruppen der allgemeinen Formel -Si(R₃), wobei R gleich oder verschieden sein kann und ein nichtreaktiver organischer Rest, wie C₁₋₁₈-Alkyl, vorzugsweise C₁₋₆-Alkyl, besonders bevorzugt Methyl oder Ethyl, Cyclohexyl oder auch Phenyl ist. Es können auch C₂₋₁₈-Alkenyl, vorzugsweise C₂₋₆-Alkenylreste eingesetzt werden. Besonders vorteilhaft ist die Verwendung von Trimethylsilylgruppen zur dauerhaften Hydrophobierung des Materials, insbesondere des Aerogels.

Die Einbringung dieser Gruppen kann wie in der WO 94/25149 beschrieben erfolgen. Dabei wird eine Gasphasenreaktion zwischen dem Aerogel und einem aktivierten Derivat des Trialkylsilans, beispielsweise einem Chlortrialkylsilan oder einem Hexaalkyldisilazan durchgeführt; siehe auch R. Iler, The Chemistry of Silica, Wiley und Sons, 1979. Es kann auch ein acetonhaltiges Gel mit Trimethylisopropenoxysilan umgesetzt werden, siehe DE-C-195 02 453. Die Einführung hydrophober Oberflächengruppen ist keine notwendige Voraussetzung zur Herstellung der erfindungsgemäßen Aerogele mit niedriger Dichte, sondern sie ermöglicht eine Erweiterung des Anwendungsspektrums hinsichtlich wasserunempfindlicher Systeme.

Die Trocknung wird nach der Modifizierung im allgemeinen so lange fortgeführt, bis der Lösungsmittel-Restgehalt weniger als 0,1 Gew.-% betragt. Als Trocknungsverfahren sind beispielsweise die Kontakt- und Konvektionstrocknung sowie elektrische Trocknungsverfahren geeignet.

Nachstehend wird die Erfindung anhand von Beispielen näher erläutert.

Dabei wurde die Wärmeleitfähigkeit der erfindungsgemäß hergestellten Aerogele mit einer Heizdrahtmethode gemessen, siehe beispielsweise O. Nielsson, G. Rüschenpöhler, J Groß, J. Fricke, High Temperatures - High Pressures, Vol 21, 267 - 274 (1989) Academic Press Inc. New York.

Der Modul wurde mit einer Drei-Punkt-Biegemethode gemessen, siehe beispielsweise G. W Scherer, S. A. Pardenek, R. M. Swiatek, J. Non-Crystalline Solids, Vol. 107, 14 - 22 (1988) Academic Press Inc New York.

### Beispiel 1

Aus einer 7 Gew.-% Natriumwasserglaslösung wird über einen sauren Ionenaustauscher die freie Kieselsäure hergestellt und mit verdünnter 0,1 n Natronlauge auf einen pH-Wert von 5,7 eingestellt 100 ml dieser Lösung werden anschließend mit 10 ml einer auf 10 Gew.-% verdünnten Lösung eines handelsüblichen sulfamatmodifizierten Melaminharzes Typ Madurit® MW114 von der Cassella AG, dessen pH-Wert mit 0,1 normaler Salzsäure ebenfalls auf 5,7 eingestellt wird, zu einem Sol vermischt und in 6 mm dicke Rohre gegossen. Anschließend wird das Sol für 6 Stunden bei 85°C geliert, abgekühlt und aus den Rohren herausgenommen. Danach wird das in den Poren des Gels vorhandene Wasser solange gegen Aceton ausgetauscht, bis die Konzentration des Wassers im Aceton kleiner als 1 Gew.-% ist. Das erhaltene Gel wird im erhitzten Stickstoffstrom bei 150°C und 1000 l/h getrocknet. Die Feststoffdichte des getrockneten Gels beträgt 0,28 g/cm³ und die Wärmeleitfähigkeit bei Raumtemperatur 47 mW/mK.

### Beispiel 2

Aus einer 7 Gew.-% Natriumwasserglaslösung wird über einen sauren Ionenaustauscher die freie Kieselsäure hergestellt und mit verdünnter 0,1 n Natronlauge auf einen pH-Wert von 5,7 eingestellt. 100 ml dieser Losung werden anschließend mit 5 ml einer auf 10 Gew.-% verdünnten Losung eines handelsüblichen sulfamatmodifizierten Melaminharzes Typ Madurit® MW114 von der Cassella AG, dessen pH-Wert mit 0,1 normaler Salzsäure ebenfalls auf 5,7 eingestellt wird, zu einem Sol vermischt und in 6 mm dicke Rohre gegossen. Anschließend wird das Sol für 6 Stunden bei 85°C geliert, abgekühlt und aus den Rohren herausgenommen. Danach wird das in den Poren des Gels vorhandene Wasser solange gegen Aceton ausgetauscht, bis die Konzentration des Wassers im Aceton kleiner als 1 Gew -% ist. Das erhaltene Gel wird im erhitzten Stickstoffstrom bei 150°C und 2000 l/h getrocknet. Die Feststoffdichte des getrockneten Gels beträgt 0,22 g/cm³ und die Wärmeleitfähigkeit bei Raumtemperatur 34 mW/mK.

### Beispiel 3

Aus einer 7 Gew.-% Natriumwasserglaslösung wird über einen sauren Ionenaustauscher die freie Kieselsäure hergestellt und mit verdünnter 0,1 n Natronlauge auf einen pH-Wert von 5,7 eingestellt. 100 ml dieser Lösung werden anschließend mit 6 ml einer auf 10 Gew.-% verdünnten Lösung eines handelsüblichen sulfamatmodifizierten Melaminharzes Typ Madurit® MW114 von der Cassella AG, dessen pH-Wert mit 0,1 normaler Salzsäure ebenfalls auf 5,7 eingestellt wird, zu einem Sol vermischt. Zusätzlich wird dem Sol 1 Gew.-% (bezogen auf den Feststoffanteil im Sol) handelsüblicher Acetylenruß mittels "Ultrathurrax" beigemischt und in 6 mm dicke Rohe gegossen. Anschließend wird das Sol für 6 Stunden bei 85°C geliert, abgekühlt und aus den Rohren herausgenommen. Danach wird das in den Poren des Gels vorhandene Wasser solange gegen Isopropanol ausgetauscht, bis die Konzentration des Wassers im Isopropanol kleiner als 1 Gew.-% ist. Das erhaltene Gel wird im erhitzten Stickstoffstrom bei 150°C und 1000 l/h getrocknet. Die Feststoffdichte des getrockneten Gels beträgt 0,28 g/cm³ und die Wärmeleitfähigkeit bei Raumtemperatur 50 mW/mK.

## Patentansprüche

1. Verfahren zur Herstellung von Materialien mit in Dimensionen von maximal 100 nm interpenetrierenden organischen und anorganischen Netzwerken durch
(1) Mischen von wäßrigen Lösungen oder Dispersionen von zur Ausbildung von Polymernetzwerken in wäßriger Phase fähigen organischen Polymeren, Polymervorläufern oder deren Gemischen und von Siliciumdioxid-Komponenten,
(2) Änderung des pH-Werts und/oder thermische Behandlung der wäßrigen Lösung oder Dispersion zur Ausbildung eines Gels aus interpenetrierenden organischen und Kieselgel-Netzwerken und
(3) Trocknen des Gels.

2. Verfahren nach Anspruch 1, **dadurch gekennzeichnet, daß** die organischen Polymere oder deren Vorläufer auf Formaldehyd oder Formaldehyd enthaltenden Harzen, Polyvinylalkohol oder Poly(meth)acrylaten basieren.

3. Verfahren nach Anspruch 1 oder 2, **dadurch gekennzeichnet, daß** als Siliciumdioxid-Komponente Wasserglas, Schichtsilikate oder Kieselsäuren eingesetzt werden.

4. Verfahren nach einem der Ansprüche 1 bis 3, **dadurch gekennzeichnet, daß** der wäßrigen Lösung Füllstoffe in Form von Teilchen, Fasern, Geweben, Vliesen, Matten oder deren Gemischen, Funktionsstoffe, wie Farbstoffe, Indikatoren, Biomoleküle, Rezeptoren oder deren Gemische zugesetzt werden.

5. Verfahren nach einem der Ansprüche 1 bis 4, **dadurch gekennzeichnet, daß** in den Materialien vor dem Trocknen das Wasser durch ein organisches Lösungsmittel ersetzt wird und die Kieselgele durch Silylierung organisch modifiziert werden.

6. Verfahren nach einem der Ansprüche 1 bis 5, **dadurch gekennzeichnet, daß** das Trocknen unter Bedingungen ausgeführt wird, die zu einem Composit-Material führen, wobei das Composit-Material calciniert werden kann.

7. Verfahren nach einem der Anspruche 1 bis 5, **dadurch gekennzeichnet, daß** das Trocknen unter Bedingungen ausgeführt wird, die zu einem Xerogel oder Aerogel führen.

8. Materialien mit in Dimensionen von maximal 100 nm interpenetrierenden organischen und anorganischen Netzwerken, herstellbar nach einem Verfahren gemäß einem der Ansprüche 1 bis 7.

9. Aerogel aus in Dimensionen von maximal 100 nm interpenetrierenden organischen und anorganischen Netzwerken mit einer Dichte von maximal 0,6 g/cm³.

10. Verwendung von Aerogelen nach Anspruch 9 oder Aerogelen, die gemäß dem Verfahren nach Anspruch 7 herstellbar sind, zur Herstellung von Formkörpern oder Oberflächenbeschichtungen mit Warmedämm-, Schalldämpfungs- und/oder Adsorptionseigenschaften und/oder Barriereeigenschaften gegen Wasser und/oder organische Lösungsmittel.

11. Verwendung von Composit-Materialien, die gemäß dem Verfahren nach Anspruch 6 herstellbar sind, zur Herstellung von Granulaten oder keramischen Formkörpern.

12. Formkörper oder Oberflächenbeschichtung aus Materialien nach Anspruch 8 oder 9.

13. Verfahren zur Herstellung von Formkorpern oder Oberflächenbeschichtungen nach Anspruch 12, **dadurch gekennzeichnet, daß** die wäßrigen Losungen oder Dispersionen in eine Form eingebracht oder auf eine Oberfläche aufgebracht werden und anschließend ein Gel ausgebildet und getrocknet wird.

14. Verwendung von Materialien, wie sie in einem der Ansprüche 6 bis 12 definiert sind, in Verbindung mit Farbstoffen, Indikatoren, Rezeptoren, Enzymen und/oder Biomolekülen für die medizinische Diagnostik und Sensorik.

## Claims

1. A process for the production of materials having organic-inorganic networks interpenetrating at dimensions of maximally 100 nm, by
(1) mixing aqueous solutions or dispersions of organic polymers, polymer precursors or mixtures thereof that are capable of forming polymer networks in an aqueous phase, and of components of silica,
(2) changing pH and/or thermally treating the aqueous solution or dispersion to form a gel of interpenetrating organic networks und of silica networks, and
(3) drying the gel.

2. The process of claim 1, **characterized in that** the organic polymers or precursors thereof are based on formaldehyde or resins containing formaldehyde, on polyvinylalcohol or on poly(meth)acrylates.

3. The process of claim 1 or 2, **characterized in that** water glass, phyllosilicates or silicic acids are used as the silica component.

4. The process of one of claims 1 to 3, **characterized in that** fillers in the form of particles, fibers, tissue, fleeces, mats or mixtures thereof, functional substances such as dyes, indicators, biomolecules, receptors or mixtures thereof are added to the aqueous solution.

5. The process of one of claims 1 to 4, **characterized in that**, in the materials, prior to drying, water is replaced by an organic solvent and the silica gels are organically modified by silylation.

6. The process of one of claims 1 to 5, **characterized in that** drying is realized under conditions that lead to a composit material, wherein said composit material may be calcined.

7. The process of one of claims 1 to 5, **characterized in that** drying is realized under conditions that lead to a xerogel or to an aerogel.

8. Materials with organic-inorganic networks interpenetrating at dimensions of maximally 100 nm, said materials being producible in a process according to claims 1 to 7.

9. An aerogel consisting of organic-inorganic networks interpenetrating at dimensions of maximally 100 nm, said aerogel having a density of 0,6 g/cm³ at the most.

10. Use of aerogels according to claim 9 or of aerogels producible according to the process of claim 7, for the production of mouldings or surface coatings that show qualities of heat insulation, sound insulation and/or adsorption and/or possess barrier effects against water and/or organic solvents.

11. Use of composit materials producible according to the process of claim 6, for the production of granulates or ceramic mouldings.

12. Moulding or surface coating made of a material according to claim 8 or 9.

13. A process for the production of mouldings or surface coatings according to claim 12, **characterized in that** the aqueous solutions or dispersions are introduced into a mould or applied onto a surface and that, subsequently, a gel is formed and dried.

14. The use of materials as defined in one of claims 6 to 12 in company with dyes, indicators, receptors, enzymes and/or biomolecules for medical diagnosis and sensory analysis.

## Revendications

1. Procédé pour la production de matières aux structures réticulées organiques et inorganiques interpénétrant en dimensions de 100 nm au maximum, par
(1) le mélange de solutions ou dispersions aqueuses de polymères organiques aptes à la formation de structures réticulées polymères au milieu aqueux, de précurseurs polymériques ou de mélanges de ceux-ci, ou de constituants en silice,
(2) le changement du pH et/ou le traitement thermique de la solution ou la dispersion aqueuses pour la formation d'un gel avec des structures réticulées interpénétrantes organiques et en gels de silice, et
(3) le séchage du gel.

2. Procédé d'après la revendication 1, **caractérisé en ce que** lesdits polymères organiques ou ses précurseurs se fondent sur l'aldéhyde formique ou sur des résines contenant de l'aldéhyde formique, sur de l'alcool polyvinylique ou sur des poly(meth)acrylates.

3. Procédé d'après la revendication 1 ou 2, **caractérisé en ce que**, en tant que constituant en silice, on utilise du verre soluble, des phyllosilicates ou l'acide silicique.

4. Procédé d'après l'une des revendications 1 à 3, **caractérisé en ce que** l'on ajoute à la solution aqueuse des matières de remplissage sous forme de particules, fibres, tissus, non-tissés, voiles de carde, nattes ou des mélanges de ceux-ci, de matières fonctionelles telles que des matières tinctoriales, des indicateurs, des biomolécules, des récepteurs ou des mélanges de ceux-ci.

5. Procédé d'après l'une des revendications 1 à 4, **caractérisé en ce que**, avant le séchage, on remplace dans les matières l'eau par un solvant organique et que les gels de silice sont modifiés organiquement par silylation.

6. Procédé d'après l'une des revendications 1 à 5, **caractérisé en ce que** le séchage est réalisé sous conditions aboutissant à une matière composite, où l'on peut calciner ladite matière composite.

7. Procédé d'après l'une des revendications 1 à 5, **caractérisé en ce que** le séchage est réalisé sous conditions aboutissant à un xérogel ou à un aérogel.

8. Des matières avec des structures réticulées organiques et inorganiques interpénétrant en dimensions de 100 nm au maximum, lesdites matières étant fabricable selon un procédé d'après l'une des revendications 1 à 7.

9. Aérogel de structures réticulées organiques et inorganiques interpénétrant en dimensions de 100 nm au maximum, ledit aérogel montrant une masse volumique de 0,6 g/cm³ au maximum.

10. Utilisation d'aérogels d'après la revendication 9 ou d'aérogels qui sont fabricable selon le procédé d'après la revendication 7 pour la fabrication de moules ou de couchages de surface montrant des qualités d'isolation thermique, d'isolation acoustique et/ou d'étanchement contre l'eau et/ou des solvants organiques.

11. Utilisation de matériaux composites que l'on peut fabriquer selon le procédé d'après la revendication 6 pour la fabrication de granulés ou de moules céramiques.

12. Moule ou couchage de surface à partir de matériaux d'après la revendication 8 ou 9.

13. Procédé pour la fabrication de moules ou de couchages de surface d'après la revendication 12, **caractérisé en ce que** les solutions ou dispersions aqueuses sont introduites dans un moule ou sont appliquées sur une surface et qu'ensuite un gel est formé et séché.

14. Utilisation de matériaux tels que définis dans une des revendications 6 à 12 en combinaison avec des matières tinctoriales, des indicateurs, des récepteurs, des enzymes et/ou des biomolécules pour le diagnostic médicinal et l'analyse sensorielle.
